# EUROPÄISCHE PATENTSCHRIFT

(11) **EP 3 126 245 B1**
(45) Veröffentlichungstag und Bekanntmachung des Hinweises auf die Patenterteilung: **02.10.2019**
(21) Anmeldenummer: 15713331.5
(22) Anmeldetag: 30.03.2015
(51) Int. Cl.: B64G 1/64, B64G 1/10

(54) **ANDROGYNE KOPPLUNGSEINRICHTUNG ZUR VERBINDUNG VON MODULEN SOWIE ENTSPRECHENDE MODULE**
ANDROGYNOUS COUPLING DEVICE FOR COUPLING MODULES AND CORRESPONDING MODULES
DISPOSITIF DE COUPLAGE ANDROGYNE POUR LE COUPLAGE DES MODULES ET MODULES CORRESPONDANT

(30) Priorität: 02.04.2014 DE 102014104695
(43) Veröffentlichungstag der Anmeldung: 08.02.2017
(73) Patentinhaber: Rheinisch-Westfälische Technische Hochschule (RWTH) Aachen, 52056 Aachen (DE)
(72) Erfinder: LAKSHMANAN, Martin Anand, 52070 Aachen (DE); ADOMEIT, Marc André, 52066 Aachen (DE); SEEFELDT, Patric, 27367 Sottrum (DE); REIMER, Viktor, 52074 Aachen (DE)
(74) Vertreter: Michalski Hüttermann & Partner Patentanwälte mbB
(86) Internationale Anmeldenummer: PCT/EP2015/056923
(87) Internationale Veröffentlichungsnummer: WO 2015/150338

(56) Entgegenhaltungen:
- EP-A1- 0 196 793
- CN-U- 201 971 170
- US-A- 5 104 070

## Beschreibung

Die Erfindung betrifft eine androgyne Kopplungseinrichtung zum Verbinden von Modulen, insbesondere zum Aufbau eines modular aufgebauten Raumflugkörpers, wobei die Kopplungseinrichtung zum Verbinden der Module an eine identisch aufgebaute weitere androgyne Kopplungseinrichtung ankoppelbar ist und dazu mehrere Koppelelemente aufweist. Die Erfindung betrifft weiterhin ein Modul, insbesondere ein Modul zum Aufbau eines modular aufgebauten Raumflugkörpers, mit mindestens einer derartigen Kopplungseinrichtung.

Die EP 0 196 793 A1 zeigt einen modular aufgebauten Satelliten dessen Module androgyne Kopplungseinrichtungen zum Verbinden der einzelnen Module untereinander aufweisen. Jede dieser androgynen Kopplungseinrichtungen ist für ein Ankoppeln an und ein Verbinden mit einer identisch aufgebauten Koppeleinrichtung eines anderen Moduls eingerichtet und weist dazu mehrere Koppelelemente auf. Mit einer solchen androgynen Kopplungseinrichtung (androgynen Schnittstelle) für orbital wartbare Satellitensysteme wird die Rekonfiguration eines aus Bausteinen bestehenden, modularen Satellitensystems durch robotische Manipulation ermöglicht.

Derzeitig in Betrieb befindliche Satellitensysteme können nur in seltenen Ausnahmefällen orbital gewartet werden und sind dann auf den Einsatz bemannter Raumfahrtmissionen angewiesen. Ein ökonomisch und technisch vertretbarer Einsatz solcher Missionen ist auf wenige Raumfahrtprojekte beschränkt. Eine robotisch basierte Wartung im Orbit (sogenanntes On-Orbit Servicing) ist unter Anderem nicht etabliert, da die bisherigen Kopplungseinrichtungen ein Verbinden der Module nur bei fest vorgegebener Annäherungsroutine ermöglicht.

Das Dokument EP 0 196 793 A zeigt eine androgyne Kopplungseinrichtung zum Verbinden von Modulen, insbesondere zum Aufbau eines modular aufgebauten Raumflugkörpers, wobei die Kopplungseinrichtung zum Verbinden der Module an eine identisch aufgebaute weitere androgyne Kopplungseinrichtung ankoppelbar ist und mehrere Koppelelemente sowie ein eine im Wesentlichen plane Außenfläche bereitstellendes Abdeckelement aufweist, in welchem ein oder mehrere Durchbrüche ausgebildet sind. Die als Riegel ausgebildeten Koppelelemente können ausgefahren und zurückgezogen werden.

Aufgabe der vorliegenden Erfindung ist es, eine androgyne Kopplungseinrichtung und ein Modul mit einer solchen androgynen Kopplungseinrichtung anzugeben, die eine Annäherungsroutine mit erhöhter Anzahl von Freiheitsgraden erlauben.

Die Lösung der Aufgabe erfolgt durch die Merkmale des unabhängigen Anspruchs 1. Vorteilhafte Ausgestaltungen sind in den Unteransprüchen angegeben.

Die erfindungsgemäße androgyne Kopplungseinrichtung weist ein Abdeckelement auf, das die Koppelelemente in einem passiven Zustand der Kopplungseinrichtung abdeckt, wobei ein erstes der Koppelelemente zum aktiven Ankoppeln an die identisch aufgebaute weitere Kopplungseinrichtung durch das Abdeckelement hindurch nach außen verfahrbar ist.

Durch eine derartige androgyne Kopplungseinrichtung wird die robotergestützte Wartung von Satelliten, hierbei insbesondere der Austausch defekter Module sowie technisch notwendige Systemrekonfigurationen, während des Betriebs im Weltraum ermöglicht. Durch die versenkbare, androgyne Schnittstelle wird ein Lösen und Verbinden der Module durch Roboter ermöglicht, wobei die eigentliche Kopplung mittels der Koppelelemente automatisiert abläuft. Der Einsatz des Roboters beschränkt sich dabei ausschließlich auf die Manipulation der Satellitenmodule zu deren gegenseitiger Ausrichtung. Jede neue Kopplungseinrichtung kann aufgrund ihres androgynen Designs mit jeder beliebigen vorhandenen Kopplungseinrichtung verbunden werden. Durch die redundante Konzeption des Kopplungsmechnismus wird die Lösbarkeit der Verbindung auch bei Ausfall eines Kopplungspartners sichergestellt.

Mit Hilfe der erfindungsgemäßen androgynen Kopplungseinrichtung kann also jedes Modul des Satellitensystems im Laufe der Mission mittels "On-Orbit Servicing" beliebig oft ausgetauscht werden. Dadurch erhöht sich die Lebensdauer des modularen Satelliten erheblich.

Neben den bereits genannten positiven Aspekten bietet die konkrete konstruktive Umsetzung der aus wenigen Bauteilen bestehenden Kopplungseinrichtung Vorteile in Hinblick auf ökonomische sowie funktionale Anforderungen, insbesondere geringe Ausfallwahrscheinlichkeit.

Erfindungsgemäß stellt das Abdeckelement eine im Wesentlichen plane Außenfläche bereit, die gegebenenfalls einen oder mehrere Durchbrüche aufweist.

Erfindungsgemäß ist weiterhin vorgesehen, dass ein Durchbruch im Abdeckelement ausgebildet ist, der ein Eindringen eines nach außen verfahrenen entsprechenden ersten Koppelelements der identisch aufgebauten weiteren androgynen Kopplungseinrichtung in einen Bereich hinter dem Abdeckelement ermöglicht, wobei in diesem Bereich ein von dem Abdeckelement permanent abgedecktes zweites der Koppelelemente der Kopplungseinrichtung zum kraft- und/oder formschlüssigen Verbinden mit dem in den Bereich hineingefahrenen ersten Koppelelement der identisch aufgebauten weiteren Kopplungseinrichtung angeordnet ist. In einer bevorzugten Ausgestaltung der Erfindung ist das eigene erste Koppelelement der Kopplungseinrichtung zum aktiven Ankoppeln an die identische weitere Kopplungseinrichtung durch genau diesen Durchbruch hindurch nach außen verfahrbar.

Gemäß einer bevorzugten Ausgestaltung der Erfindung ist vorgesehen, dass sowohl das erste Koppelelement als auch das zweite Koppelelement zum Fixieren der Verbindung als auch zum Lösen der Verbindung mit dem jeweils anderen Koppelelement der identisch aufgebauten weiteren androgynen Koppeleinrichtung verlagerbar ist. Insbesondere kann die Verbindung also mittels des ersten Koppelelements als auch mittels des zweiten Koppelelements gelöst werden. Es ergibt sich also die Möglichkeit, die Verbindung durch Betätigung des ersten Koppelelements der einen beteiligten Kopplungseinrichtung herzustellen und durch Betätigung des zweiten Koppelelements der anderen beteiligten Kopplungseinrichtung wieder zu lösen.

Gemäß einer weiteren bevorzugten Ausgestaltung der Erfindung erfolgt das Verbinden durch eine bajonettartige Steck-Drehbewegung. Das Lösen erfolgt dann durch eine entsprechende Dreh-Zugbewegung. Die Verlagerung zum Fixieren der Verbindung (oder zum Lösen der Verbindung) ist dann ein Verdrehen des ersten und/oder des zweiten Koppelelements.

Gemäß einer weiteren bevorzugten Ausgestaltung der Erfindung ist vorgesehen, dass das Abdeckelement als Abdeckplatte ausgebildet ist, die gegebenenfalls den einen oder mehrere Durchbrüche aufweist.

Gemäß noch einer weiteren bevorzugten Ausführungsform der Erfindung ist vorgesehen, dass die androgyne Kopplungseinrichtung eine Mehrzahl von teilweise aus dem Abdeckelement herausfahrbaren Stiften aufweist, die zur drehfesten Fixierung der weiteren Kopplungseinrichtung an der Kopplungseinrichtung im Abdeckelement der weiteren Kopplungseinrichtung ausgebildete Ausnehmungen einfahren können. Dadurch wird ein versehentliches verdrehen der beiden Kopplungseinrichtungen gegeneinander unterbunden.

Gemäß noch einer weiteren bevorzugten Ausführungsform der Erfindung ist vorgesehen, dass das erste Koppelelement mehrere nach außen weisende Hintergriffelemente und das zweite Koppelelement eine ringförmige Basis mit mehreren nach innen weisenden Hintergriffelementen aufweist. Ein solcher Aufbau ist bei einem bajonettartigen Verschluss nicht unüblich.

Ferner ist mit Vorteil vorgesehen, dass die androgyne Kopplungseinrichtung weiterhin (i) ein Grundelement, insbesondere eine Grundplatte, (ii) ein auf dem Grundelement befestigtes

Linearführungselement zur Führung der Verfahrbewegung des ersten Koppelelements und (iii) einen Antrieb der Kopplungseinrichtung mit einem Antriebsmotor aufweist.

Schließlich ist mit Vorteil vorgesehen, dass der Antrieb eine Kulissenführung aufweist, die die Drehbewegung des Antriebsmotors in den Bewegungsablauf der Koppelelemente oder zumindest des ersten Koppelelements umsetzt. Hauptbewegung ist dabei die bajonettartige Steck-Drehbewegung des ersten Koppelelements. In einer besonderen Ausführungsform wird auch das Aus- und Einfahren der Stifte über die Kulissenführung angesteuert.

Bei dem erfindungsgemäßen Modul mit der mindestens einen Kopplungseinrichtung ist vorgesehen, dass diese Kopplungseinrichtung als vorstehend genannte Kopplungseinrichtung ausgebildet ist. Rein prinzipiell kann das Modul selbstverständlich ein Modul für den Aufbau einer beliebigen modular aufgebauten Vorrichtung sein. Bevorzugt ist das Modul jedoch ein Modul zum Aufbau eines modular aufgebauten Raumflugkörpers, insbesondere eines modular aufgebauten Satelliten.

Nachfolgend wird ein Ausführungsbeispiel der Erfindung anhand einer Zeichnung näher erläutert. Darin zeigt die
- Fig.: eine Explosionsdarstellung einer androgynen Kopplungseinrichtung für ein Modul zum Aufbau eines modular aufgebauten Raumflugkörpers gemäß einer bevorzugten Ausführungsform der Erfindung.

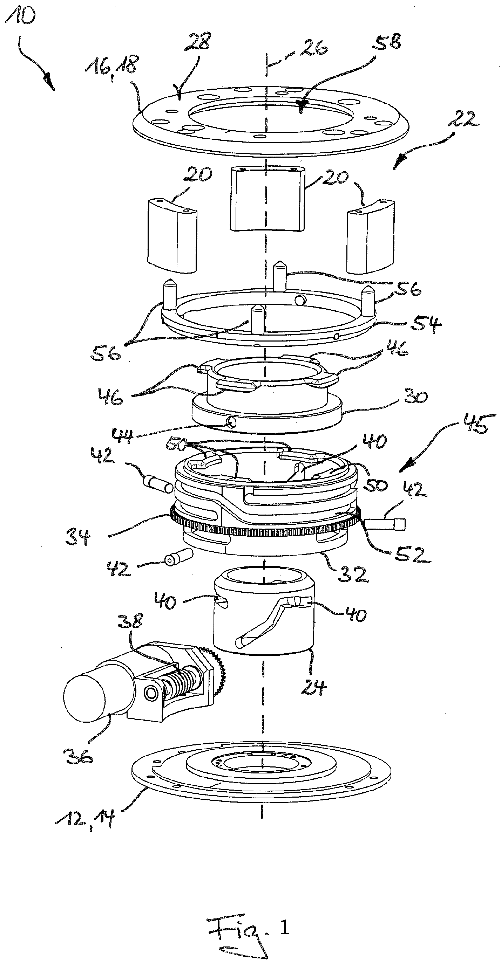

Die einzige Figur zeigt in einer Explosionsdarstellung eine androgyne Kopplungseinrichtung 10 eines (selbst nicht gezeigten) Moduls zum Aufbau eines modular aufgebauten Raumflugkörpers, genauer gesagt eines modular aufgebauten Satelliten. Die androgyne Kopplungseinrichtung 10 weist als Grundelement 12 eine Grundplatte 14 auf, auf der die weiteren Komponenten der Kopplungseinrichtung 10 aufgebaut sind. Ein als Deckplatte 16 ausgebildetes Abdeckelement 18 der Kopplungseinrichtung 10 ist über Abstandselemente 20 an dem Grundelement 12 befestigt, sodass sich zwischen Grundelement 12 und dem Abdeckelement 18 eine (innerer) Bereich 22 der Kopplungseinrichtung 10 ausbildet, der von dem Abdeckelement 18 mehr oder weniger nach außen abgedeckt wird. Im gezeigten Beispiel sind Grundplatte 14 und Deckplatte 16 jeweils als Kreisringscheiben ausgebildet, die planparallel angeordnet sind. Auf der dem Abdeckelement 18 zugewandten Seite des Grundelements 12 bzw. der Grundplatte 14 sind nun die weiteren Komponenten angeordnet. Direkt auf dem Grundelement 12 ist zentral ein hülsenförmiges Linearführungselement 24 angeordnet, das sich mit seiner Längsachse 26 in Richtung des Abdeckelements 18 erstreckt. Diese Längsachse 26 verläuft senkrecht auf der von dem Abdeckelement 18 gebildeten Außenfläche 28 und stimmt mit den entsprechenden Symmetrieachsen der als Kreisringscheiben ausgebildeten Grund- und Deckplatte 14, 16 überein. Der Innenraum des hülsenförmigen Linearführungselements 24 bildet eine Erweiterungsöffnung für weitere Schnittstellen zur Netzanbindung, Datenanbindung, hydraulischen und/oder pneumatischen Anbindung der beteiligten Module untereinander. Das hülsenförmige Linearführungselements 24 ist von ebenfalls hülsenförmigen, ineinander geschachtelten Koppelelementen 30, 32 umgeben. Dabei wird das Linearführungselement 24 direkt von einem ersten Koppelelement 30 umfänglich umgeben, das seinerseits von einem zweiten Koppelelement 32, umfänglich umgeben wird. Das zweite Koppelelement 32 weist auf seiner Mantelaußenfläche ein Stirnrad 34 auf, das über einen an dem Grundelement 12 befestigten Antriebsmotor 36 und ein dem Antriebsmotor 36 nachgeschaltetes Schneckengetriebe 38 drehend antreibbar ist beziehungsweise angetrieben wird. Sowohl in dem Linearführungselement 24 als auch im zweiten Koppelelement 32 sind Führungsbahnen 40 in Form von Nuten von vorgegebenem Verlauf ausgebildet, in denen Führungsstifte 42 geführt werden, die durch (passgenaue) Durchbrüche 44 im ersten Koppelelement 30 geführt sind. Es bewegen sich also die Bahnen 40 in dem vom Antriebsmotor 36 angetriebenen zweiten Koppelelement 32 relativ zu den grundelementefesten Bahnen 40 im Linearführungselement 24 und erzeugen über die resultierende Bewegung der Stifte 42 eine kombinierte translatorisch-rotatorische Bewegung des ersten Koppelelements 30. Diese Bewegung ist im Wesentlichen bajonettverschlussartig. Die Führungsbahnen 40 und Die Führungsstifte 42 bilden eine Kulissenführung 45, die die Drehbewegung des Antriebsmotors 36 in den Bewegungsablauf des ersten Koppelelements 30 umsetzt.

Das erste Koppelelement 30 weist über den Umfang verteilt an seinem dem Abdeckelement 16 zugewandten Ende mehrere (im gezeigten Beispiel genau vier) nach außen weisende Hintergriffelemente 46 auf. Das dem Abdeckelement 16 zugewandte Ende des zweiten Koppelelements 32 bildet eine ringförmige Basis 48 mit mehreren nach innen weisenden Hintergriffelementen 50. An der Außenmantelfläche des zweiten Koppelelements 32 sind weiterhin von Nuten gebildete Führungsbahnen 52 für die nach innen weisenden Pinne eines Stift-Rings 54 mit mehreren (im gezeigten Beispiel genau vier) Stiften 56, die in entsprechenden Durchbrüche im Abdeckelement 16 geführt sind und durch diese Durchbrüche nach außen fahren können. Die Führungsbahnen 52 und die Pinne bilden eine weitere Kulissenführung 45, die die Drehbewegung des Antriebsmotors 36 in den Bewegungsablauf der Stifte 56 umsetzt.

Im Folgenden soll nun die Funktion der androgynen Kopplungseinrichtung 10 beschrieben werden, wobei diese Kopplungseinrichtung zum Koppeln immer mit einer identisch aufgebauten weiteren androgynen Kopplungseinrichtung zusammenwirkt, wobei diese weitere Kopplungseinrichtung nicht dargestellt ist und daher gedanklich ergänzt werden muss.

Zunächst werden die beteiligten Module so angeordnet, dass die Oberflächen 28 der Abdeckelemente ihrer Kopplungseinrichtungen 10 so aufeinander liegen, dass deren Achsen 26 fluchten. Anschließend erfolgt das automatische Koppeln.

### Fall 1: die betrachtete androgyne Kopplungseinrichtung 10 als aktive Kopplungseinrichtung.

Angetrieben vom Antriebsmotor 36 werden die Stifte 56 über die Führungsbahnen 52 und die Pinne des Stift-Rings 54 ausgefahren und greifen in Ausnehmungen im Abdeckelement der weiteren androgynen Kopplungseinrichtung. Die beiden Kopplungseinrichtungen bzw. die beteiligten Module werden dadurch gegen ein Verdrehen gesichert. Anschließend fährt das erste Koppelelement 30 durch einen im Abdeckelement 16 ausgebildeten Durchbruch 58 aus dem Abdeckelement 16 der eigenen Kopplungseinrichtung 10 aus und durch einen entsprechenden Durchbruch im Abdeckelement der weiteren Kopplungseinrichtung 10 hindurch in dessen Bereich hinter diesem Abdeckelement ein, wo sich das zweite Koppelelement dieser weiteren Kopplungseinrichtung 10 befindet. Anschließend wird das erste Koppelelement 30 der gezeigten Kopplungseinrichtung 10 verdreht, sodass die Hintergriffelemente 46 in Hintergriff zu den Hintergriffelementen des zweiten Koppelelements der weiterenen Kopplungseinrichtung 10 gelangen. Durch entsprechende Auflaufschrägen ergibt sich ein Form- und Kraftschluss.

Zum Lösen der Kopplung/Verbindung kann nun entweder das erste Koppelelement 30 der gezeigten Kopplungseinrichtung 10 zurückbewegt werden oder das zweite Koppelelement der weiteren Kopplungseinrichtung wird verdreht.

### Fall 2: die betrachtete androgyne Kopplungseinrichtung 10 als passive Kopplungseinrichtung.

Die Stifte der weiteren Kopplungseinrichtung werden ausgefahren und greifen in Ausnehmungen im Abdeckelement 16 der gezeigten androgynen Kopplungseinrichtung. Das erste Koppelelement der weiteren Kopplungseinrichtung fährt entlang der Achse 28 durch den Durchbruch 58 im Abdeckelement 16 in den abgedeckten Bereich 22 der gezeigten Kopplungseinrichtung 10, wo sich das zweite Koppelelement 32 befindet. Anschließend wird das erste Koppelelement der weiteren Kopplungseinrichtung verdreht, sodass dessen Hintergriffelemente in Hintergriff zu den Hintergriffelementen 50 des zweiten Koppelelements 32 der gezeigten Kopplungseinrichtung 10 gelangen. Durch entsprechende Auflaufschrägen ergibt sich ein Form- und Kraftschluss.

Zum Lösen der Kopplung/Verbindung kann nun entweder das erste Koppelelement der weiteren Kopplungseinrichtung zurückbewegt werden oder das zweite Koppelelement 32 der gezeigten Kopplungseinrichtung 10 wird verdreht.

### Bezugszeichenliste:

- 10: Kopplungseinrichtung, androgyn
- 12: Grundelement
- 14: Grundplatte
- 16: Deckplatte
- 18: Abdeckelement
- 20: Abstandselement
- 22: Bereich
- 24: Linearführungselement
- 26: Längsachse
- 28: Außenfläche (Abdeckelement)
- 30: Koppelelement, erstes
- 32: Koppelelement, zweites
- 34: Stirnrad
- 36: Antriebsmotor
- 38: Schneckengetriebe
- 40: Führungsbahn
- 42: Führungsstift
- 44: Durchbruch
- 45: Kulissenführung
- 46: Hintergriffelement (1. Koppelelement)
- 48: Basis, ringförmig
- 50: Hintergriffelement (2. Koppelelement)
- 52: Führungsbahn
- 54: Stift-Ring
- 56: Stift
- 58: Durchbruch

## Patentansprüche

1. Androgyne Kopplungseinrichtung (10) zum Verbinden von Modulen, insbesondere zum Aufbau eines modular aufgebauten Raumflugkörpers, wobei die Kopplungseinrichtung (10) zum Verbinden der Module an eine identisch aufgebaute weitere androgyne Kopplungseinrichtung ankoppelbar ist und mehrere Koppelelemente (30, 32) sowie ein eine im Wesentlichen plane Außenfläche (28) bereitstellendes Abdeckelement (18) aufweist, in welchem ein oder mehrere Durchbrüche (58) ausgebildet sind,
**dadurch gekennzeichnet, dass**
das Abdeckelement (18) die Koppelelemente (30, 32) in einem passiven Zustand der Kopplungseinrichtung (10) abdeckt, wobei ein erstes der Koppelelemente (30) zum aktiven Ankoppeln an die identisch aufgebaute weitere Kopplungseinrichtung durch den einen oder einen der mehreren im Abdeckelement (18) gebildeten Durchbrüche (58) hindurch nach außen verfahrbar ist und der Durchbruch (58) oder einer der Durchbrüche (58) ein Eindringen eines nach außen verfahrenen entsprechenden ersten Koppelelements der identisch aufgebauten weiteren androgynen Kopplungseinrichtung in einen Bereich (22) hinter dem Abdeckelement (18) ermöglicht, wobei in diesem Bereich (22) ein von dem Abdeckelement (18) permanent abgedecktes zweites der Koppelelemente (32) der Kopplungseinrichtung (10) zum kraft- und/oder formschlüssigen Verbinden mit dem in den Bereich (22) hineingefahrenen ersten Koppelelement der identisch aufgebauten weiteren Kopplungseinrichtung angeordnet ist.

2. Kopplungseinrichtung nach Anspruch 1, **dadurch gekennzeichnet, dass** sowohl das erste Koppelelement (30) als auch das zweite Koppelelement (32) zum Fixieren der Verbindung als auch zum Lösen der Verbindung mit dem jeweils anderen Koppelelement einer identisch aufgebauten weiteren androgynen Koppeleinrichtung verlagerbar ist.

3. Kopplungseinrichtung nach einem der vorhergehenden Ansprüche, **dadurch gekennzeichnet, dass** die Verbindung durch eine bajonettartige Steck-Drehbewegung erfolgt.

4. Kopplungseinrichtung nach einem der vorhergehenden Ansprüche, **dadurch gekennzeichnet, dass** das Abdeckelement (18) als Deckplatte (16) ausgebildet ist.

5. Kopplungseinrichtung nach einem der vorhergehenden Ansprüche, **gekennzeichnet durch** eine Mehrzahl von teilweise aus dem Abdeckelement (18) herausfahrbaren Stiften (56), die zur drehfesten Fixierung der weiteren Kopplungseinrichtung an der Kopplungseinrichtung (10) im Abdeckelement der weiteren Kopplungseinrichtung ausgebildete Ausnehmungen einfahren können.

6. Kopplungseinrichtung nach einem der vorhergehenden Ansprüche, **dadurch gekennzeichnet, dass** das erste Koppelelement (30) mehrere nach außen weisende Hintergriffelemente (46) und das zweite Koppelelement (32) eine ringförmige Basis (48) mit mehreren nach innen weisenden Hintergriffelementen (50) aufweist.

7. Kopplungseinrichtung nach einem der vorhergehenden Ansprüche, **gekennzeichnet, durch**
- ein Grundelement (12), insbesondere eine Grundplatte (14),
- ein auf dem Grundelement (12) befestigtes Linearführungselement (24) zur Führung der Verfahrbewegung des ersten Koppelelements (30) und
- einen Antrieb (36, 38, 44) der Kopplungseinrichtung (10) mit einem Antriebsmotor (36).

8. Kopplungseinrichtung nach Anspruch 7, **dadurch gekennzeichnet, dass** der Antrieb (36, 38, 44) weiterhin eine Kulissenführung (38, 45) aufweist, mittels der die Drehbewegung des Antriebsmotors (36) in den Bewegungsablauf der Koppelelemente (30, 32) oder zumindest des ersten Koppelelements (30) umgesetzt wird.

9. Kopplungseinrichtung nach Anspruch 7 oder 8, **dadurch gekennzeichnet, dass** das Abdeckelement (18) über Abstandselemente (20) am Grundelement (12) befestigt ist.

10. Modul, insbesondere Modul zum Aufbau eines modular aufgebauten Raumflugkörpers, mit mindestens einer Kopplungseinrichtung (10) nach einem der Ansprüche 1 bis 9.

## Claims

1. Androgynous coupling device (10) for connecting modules, in particular for constructing a spacecraft of modular design, wherein the coupling device (10) for connecting the modules can be coupled to an identically constructed further androgynous coupling device, and has a plurality of coupling elements (30, 32) and also a cover element (18), providing an essentially flat outer surface (28), in which cover element one or more through openings (58) are designed,
**characterized in that**
the cover element (18) covers the coupling elements (30, 32) in a passive state of the coupling device (10), wherein a first of the coupling elements (30) can be moved outward through the one or one of the multiple through openings (58) formed in the cover element (18) for active coupling to the identically constructed further coupling device, and the through opening (58) or one of the through openings (58) allows a penetration of a first coupling element, moved correspondingly outward, of the identically constructed further androgynous coupling device into a region (22) behind the cover element (18), wherein a second of the coupling elements (32) of the coupling device (10) is permanently covered by the cover element (18) and is arranged in this region (22) for force and/or form compliant connection to the first coupling element of the identically constructed further androgynous coupling device moved into the region (22).

2. Coupling device according to claim 1, **characterized in that** both the first coupling element (30) and also the second coupling element (32) is displaceable for fixing the connection and also for releasing the connection with the respectively other coupling element of an identically constructed further androgynous coupling device.

3. Coupling device according to any one of the preceding claims, **characterized in that** the connection is carried out by a bayonet type push-twist movement.

4. Coupling device according to any one of the preceding claims, **characterized in that** the cover element (18) is designed as a cover plate (16).

5. Coupling device according to any one of the preceding claims, **characterized by** a plurality of pins (56) partially extendable from the cover element (18), which can insert into recesses designed in the cover element of the further coupling device for non-rotatable fixing of the further coupling device to the coupling device (10) .

6. Coupling device according to any one of the preceding claims, **characterized in that** the first coupling element (30) has a plurality of outwardly directed elements that engage behind (46) and the second coupling element (32) has an annular base (48) with a plurality of inwardly directed elements that engage behind (50).

7. Coupling device according to any one of the preceding claims, **characterized by**
- a base element (12), in particular a base plate (14),
- a linear guide element (24), fixed on the base element (12), for guiding the travelling movement of the first coupling element (30), and
- a drive (36, 38, 44) of the coupling device (10) with a drive motor (36).

8. Coupling device according to claim 7, **characterized in that** the drive (36, 38, 44) additionally has a slide guide (38, 45) by means of which the rotational movement of the drive motor (36) may be converted into the movement sequence of the coupling elements (30, 32) or of at least the first coupling element (30).

9. Coupling device according to claim 7 or 8, **characterized in that** the cover element (18) is fixed on the base element (12) via spacer elements (20).

10. Module, in particular a module for constructing a spacecraft of modular design, comprising at least one coupling device (10) according to any one of claims 1 to 9.

## Revendications

1. Dispositif de couplage androgyne (10) pour assembler des modules, en particulier pour le construction d'un engin spatial constitué de façon modulaire, sachant que le dispositif de couplage (10) pour assembler les modules peut être couplé à un autre dispositif de couplage androgyne constitué de façon identique et comporte plusieurs éléments de couplage (30, 32) ainsi qu'un élément de couverture (18) fournissant une surface extérieure (28) pour l'essentiel plane dans lequel sont constitués un ou plusieurs passages (58),
**caractérisé en ce que**
l'élément de couverture (18) recouvre les éléments de couplage (30, 32) dans un état passif du dispositif de couplage (10), sachant qu'un premier des éléments de couplage (30) peut être déplacé vers l'extérieur à travers un ou un des plusieurs passages (58) formés dans l'élément de couverture (18) pour le couplage actif à l'autre dispositif de couplage constitué de façon identique et le passage (58) ou un des passages (58) permet une pénétration d'un premier élément de couplage correspondant déplacé vers l'extérieur de l'autre dispositif de couplage androgyne constitué de façon identique dans une zone (22) située derrière l'élément de couverture (18), sachant que dans cette zone (22) est disposé un deuxième des éléments de couplage (32) du dispositif de couplage (10) couvert en permanence par l'élément de couverture (18) pour l'assemblage par conformité de force et/ou de forme au premier élément de couplage introduit dans la zone (22) de l'autre dispositif de couplage constitué de façon identique.

2. Dispositif de couplage selon la revendication 1, **caractérisé en ce que** tant le premier élément de couplage (30) que le deuxième élément de couplage (32) peut être déplacé pour fixer l'assemblage ainsi que pour défaire l'assemblage avec l'autre élément de couplage respectif d'un autre dispositif de couplage androgyne constitué de façon identique.

3. Dispositif de couplage selon l'une quelconque des revendications précédentes, **caractérisé en ce que** l'assemblage a lieu par un mouvement de rotation d'emboîtage de type baïonnette.

4. Dispositif de couplage selon l'une quelconque des revendications précédentes, **caractérisé en ce que** l'élément de couverture (18) est constitué comme une plaque de couverture (16).

5. Dispositif de couplage selon l'une quelconque des revendications précédentes, **caractérisé par** une pluralité de tiges (56) pouvant sortir en partie de l'élément de couverture (18), qui peuvent entrer dans les évidements constitués dans l'élément de couverture de l'autre dispositif de couplage pour la fixation solidaire en rotation de l'autre dispositif de couplage au dispositif de couplage (10).

6. Dispositif de couplage selon l'une quelconque des revendications précédentes, **caractérisé en ce que** le premier élément de couplage (30) comporte plusieurs éléments d'accrochage par l'arrière tournés vers l'extérieur (46) et le deuxième élément de couplage (32) comporte une base de forme annulaire (48) avec plusieurs éléments d'accrochage par l'arrière tournés vers l'intérieur (50).

7. Dispositif de couplage selon l'une quelconque des revendications précédentes, **caractérisé par**
- un élément de base (12), en particulier une plaque de base (14),
- un élément de guidage linéaire (24) fixé sur l'élément de base (12) pour guider le mouvement de déplacement du premier élément de couplage (30), et
- un système de commande (36, 38, 44) du dispositif de couplage (10) avec un moteur d'entraînement (36) .

8. Dispositif de couplage selon la revendication 7, **caractérisé en ce que** le système d'entraînement (36, 38, 44) comporte en plus un guidage à coulisse (38, 45) au moyen duquel le mouvement de rotation du moteur d'entraînement (36) est transformé en séquence de mouvements des éléments de couplage (30, 32) ou au moins du premier élément de couplage (30).

9. Dispositif de couplage selon la revendication 7 ou 8, **caractérisé en ce que** l'élément de couverture (18) est fixé par le biais d'éléments d'espacement (20) à l'élément de base (12).

10. Module, en particulier module pour la construction d'un engin spatial construit de façon modulaire, avec au moins un dispositif de couplage (10) selon l'une quelconque des revendications 1 à 9.
